(19)

Europäisches
Patentamt

European
Patent Office

Office européen
des brevets

(11) **EP 3 415 893 A1**

(12) **EUROPEAN PATENT APPLICATION**

(43) Date of publication:
**19.12.2018 Bulletin 2018/51**

(21) Application number: **18177789.7**

(22) Date of filing: **14.06.2018**

(51) Int Cl.:
***G01N 3/30*** *(2006.01)*   ***G01N 29/44*** *(2006.01)*
***G01N 29/46*** *(2006.01)*   ***G01N 29/04*** *(2006.01)*
***G01N 29/42*** *(2006.01)*

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **16.06.2017   JP 2017118516**

(71) Applicant: **Shimadzu Corporation
Kyoto 604-8511 (JP)**

(72) Inventors:
• **MIYAZAKI, Zen
Kyoto-shi,, Kyoto 6048511 (JP)**
• **NISHIMURA, Tsukasa
Kyoto-shi,, Kyoto 6048511 (JP)**

(74) Representative: **Webster, Jeremy Mark et al
Mewburn Ellis LLP
City Tower
40 Basinghall Street
London EC2V 5DE (GB)**

(54) **EVALUATION METHOD OF IMPACT TEST AND IMPACT TESTER**

(57)   An evaluation method of an impact test and an impact tester are provided, capable of simply and accurately obtaining a natural frequency of the impact tester without adding a special machine for measuring the natural frequency of the impact tester. A personal computer (42) includes, as a functional configuration, a data extraction section (52) extracting from time-series data of force a data section for obtaining a natural frequency of an impact tester in a natural vibration analysis, and an analysis section (53) carrying out a frequency spectrum analysis on the extracted data section. The data extraction section (52) and the analysis section (53) are respectively stored as a data extraction program and an analysis program in a memory.

FIG. 2

**EP 3 415 893 A1**

## Description

## BACKGROUND

Technical Field

The disclosure relates to an evaluation method of an impact test in which force at the time when an impact is rapidly applied to a test piece is detected by a force detector, and to an impact tester.

Related Art

For an impact test for evaluating dynamic strength of a material, a tensile impact test (JIS K 7160 "Plastics - Determination of Tensile-Impact Strength") measuring energy at the time when a test piece is broken by a tensile impact at a specified speed, or a puncture impact test (JIS K 7211-2 "Plastics - Determination of Puncture Impact Behavior of Rigid Plastics") causing a striker to vertically collide with a surface of a test piece to obtain an impact force-displacement diagram, or the like, may be used. When the tensile impact test is carried out by an impact tester, both ends of the test piece are gripped by upper and lower grippers, the upper gripper is driven by a hydraulic cylinder at high speed to stretch the test piece, and impact force at breakage of the test piece is detected by a load cell (see Japanese Laid-open No. 2004-333221). In addition, when a punching test such as the puncture impact test or the like is carried out by an impact tester, a hydraulic cylinder causes a punch to collide with the test piece at high speed to damage the test piece, and impact force at that time is detected by a detector (see Japanese Laid-open No. 2004-333143).

## SUMMARY

As mentioned above, in a test in which a test jig such as the upper gripper and the punch or the like is moved by the hydraulic cylinder at high speed to apply an impact to the test piece, vibration that occurs when the test piece breaks or vibration that occurs when the punch collides with the test piece may extend over the entire impact tester. In addition, in the impact test, there are cases here and there where noise caused by natural vibration of the impact tester is added to a force waveform.

In order to know an accurate force value, it is important to know a natural frequency of the impact tester. As a method of obtaining the natural frequency of such an impact tester, the following method, for example, may be considered. The test jig is connected to a force detector, vibration waveform data generated by striking the test jig by a hammer or the like is acquired, and a frequency spectrum analysis is carried out on the waveform. However, in the case of adopting such a method, it is necessary to prepare a striking object such as the hammer or the like, and to add to the impact tester an acceleration sensor, an oscilloscope, a data logger and so on that are for collecting the vibration waveform data, apart from collecting data of a normal test performed by operating the impact tester. In addition, at the time of addition of such machines, in order to obtain accurate vibration waveform data, a user is required to correctly connect and operate the machines and a problem arises that the preparation is messy and takes time.

The disclosure provides an evaluation method of an impact test and an impact tester, capable of simply and accurately obtaining a natural frequency of the impact tester without adding a special machine for measuring the natural frequency of the impact tester.

According to a first aspect of the disclosure, an evaluation method of an impact test in which an impact is rapidly applied to a test piece is provided. The evaluation method of the impact test includes: a data extraction step in which a data section for obtaining a natural frequency of an impact tester is extracted from time-series data detected by a force detector by carrying out the impact test, in the data extraction step, the time-series data is separated before and after force is removed from the test piece, and data after the force is removed from the test piece is used as the data section for obtaining the natural frequency of the impact tester; and an analysis step in which a frequency spectrum analysis is carried out on the data section extracted in the data extraction step.

According to a second aspect of the disclosure, an impact tester rapidly applying an impact to a test piece is provided. The impact tester includes: a load structure, applying force to the test piece; a force detector, detecting the force applied to the test piece; and a control device, including a memory section storing time-series data detected by the force detector, wherein the control device includes: a data extraction section, extracting from the time-series data stored in the memory section a data section for obtaining a natural frequency of the impact tester; and an analysis section, carrying out a frequency spectrum analysis on the data section extracted in the data extraction section.

According to the first to second aspects of the disclosure, it is possible to know the natural frequency of the impact tester from the force data detected by the force detector when the impact test is carried out. In this way, in the disclosure, since there is no need to add a special machine for measuring the natural frequency of the impact tester, a complicated operation of connecting the additional machine may be omitted, and the impact tester will not become expensive because of the additional machine.

## BRIEF DESCRIPTION OF THE DRAWINGS

FIG. 1 is a schematic diagram of an impact tester according to the disclosure.

FIG. 2 is a block diagram explaining a main control system of the impact tester according to the disclosure.

FIG. 3 is a flowchart showing a natural vibration measurement procedure.

FIG. 4 is a graph showing an example of time-series data of force.

FIG. 5 is a graph showing by enlarging a waveform before and after breakage of a test piece TP in the graph of FIG. 4.

FIG. 6 is a flowchart showing a natural frequency analysis procedure.

FIG. 7 is a graph showing an example of time-series data of force.

FIG. 8 is a graph showing time-series data after breakage of the test piece TP.

FIG. 9 is a graph showing a frequency spectrum analysis result of the time-series data shown in FIG. 8.

## DESCRIPTION OF THE EMBODIMENTS

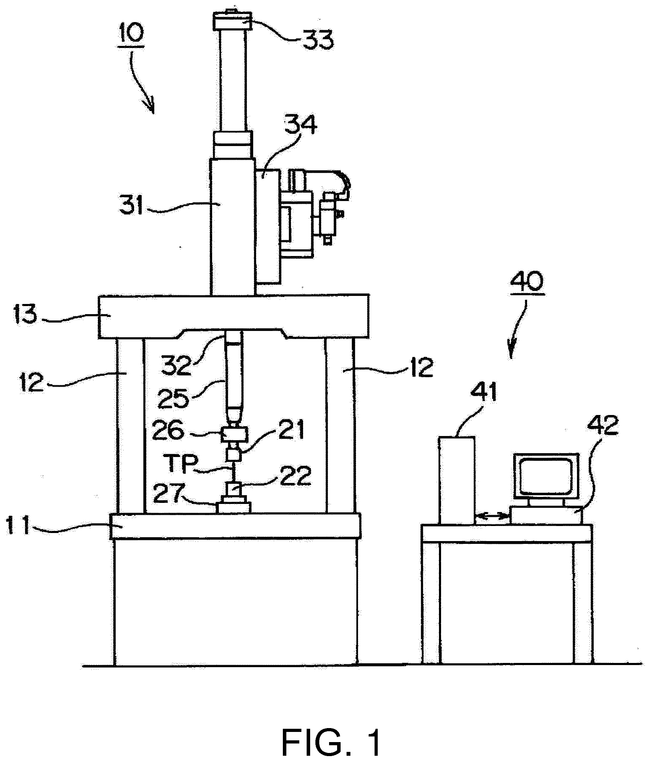

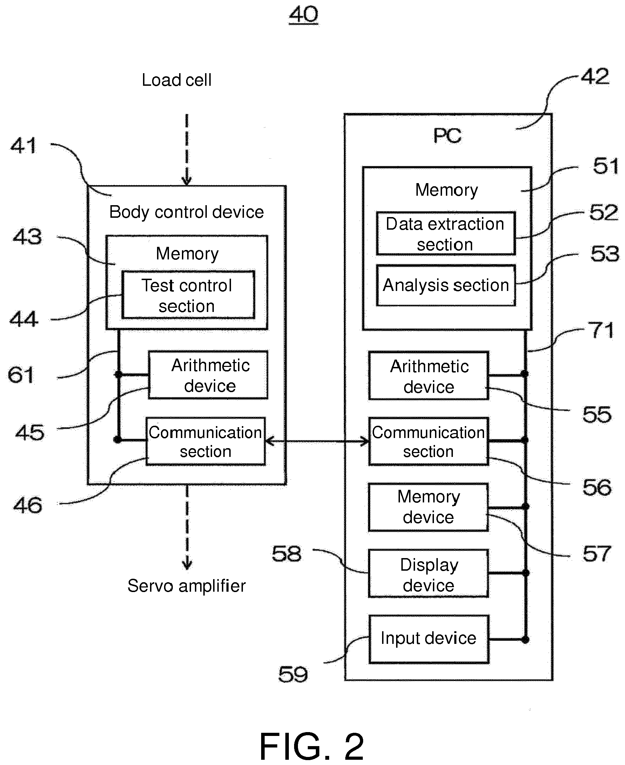

Embodiments of the disclosure are explained based on the drawings. FIG. 1 is a schematic diagram of an impact tester according to the disclosure. FIG. 2 is a block diagram explaining a main control system of the impact tester according to the disclosure.

The impact tester carries out an impact test rapidly applying an impact to a test piece TP, and includes a tester body 10 and a control device 40. The tester body 10 includes a table 11, a pair of support posts 12 erected on the table 11, a cross yoke 13 bridged over the pair of support posts 12, and a hydraulic cylinder 31 fixed to the cross yoke 13.

The hydraulic cylinder 31 is operated by operating oil supplied via a servo valve 34 from a hydraulic source (not illustrated) disposed in the table 11. An upper gripper 21 is connected to a piston rod 32 of the hydraulic cylinder 31 via an approach jig 25 and a joint 26. Meanwhile, a lower gripper 22 is connected to the table 11 via a load cell 27 being a force detector. In this way, the configuration of the tester body 10 is a configuration for carrying out a tensile impact test in which, by providing an approach section in a tensile direction by the approach jig 25 and pulling up the piston rod 32 at a high speed of 0.1 m/s to 20 m/s, a pair of grippers that grip both ends of the test piece TP are rapidly separated. A displacement (stroke) of a load structure, i.e., a movement amount of the piston rod 32, at the time when the tensile impact test is carried out is detected by a stroke sensor 33, and force at that time is detected by the load cell 27.

The control device 40 includes a body control device 41 for controlling operation of the tester body 10, and a personal computer 42. The body control device 41 includes a memory 43 storing programs, an arithmetic device 45 such as a micro processing unit (MPU) or the like performing various operations, and a communication section 46 communicating with the personal computer 42. The memory 43, the arithmetic device 45 and the communication section 46 are connected to one another by a bus 61. In addition, the body control device 41 includes a test control section 44 as a functional configuration. The test control section 44 is stored as a test control program in the memory 43. When the tensile impact test is carried out, by executing the test control program, a control signal is provided to the servo valve 34 and the hydraulic cylinder 31 operates. An output signal of the stroke sensor 33 and an output signal of the load cell 27 are taken into the body control device 41 at predetermined time intervals.

The personal computer 42 includes a memory 51 consisting of a read-only memory (ROM) that stores a data analysis program, a random access memory (RAM) that loads a program and temporarily stores data when executing the program and so on, an arithmetic device 55 such as a central processing unit (CPU) or the like performing various operations, a communication section 56 communicating with an external connection machine such as the body control device 41 or the like, a memory device 57 storing data, a display device 58 and an input device 59. Moreover, the memory device 57 is a memory section storing time-series data of force of an impact test and so on, and is composed of a large capacity memory device such as a hard disk drive (HDD) or the like. The memory 51, the arithmetic device 55, the communication section 56, the memory device 57, the display device 58 and the input device 59 are connected to one another by a bus 71.

In addition, the personal computer 42 includes, as a functional configuration, a data extraction section 52 extracting from the time-series data of the force a data section for obtaining a natural frequency of the impact tester in a later-described natural vibration analysis, and an analysis section 53 carrying out a frequency spectrum analysis on the extracted data section. The data extraction section 52 and the analysis section 53 are respectively stored as a data extraction program and an analysis program in the memory 51. These programs are executed due to the action of the arithmetic device 55.

The force detected by the load cell 27 when the tensile impact test is carried out is input to the memory 43 of the body control device 41, and then sent from the communication section 46 to the personal computer 42. The force received by the communication section 56 of the personal computer 42 is stored as time-series data in the memory device 57.

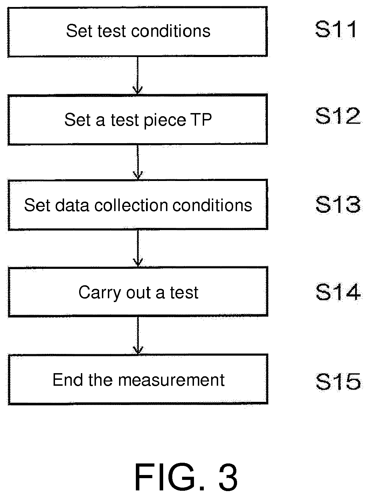

FIG. 3 is a flowchart showing a natural vibration measurement procedure. This flowchart shows the measurement procedure of the natural vibration in a tensile impact test using a synthetic resin piece such as polypropylene (PP), polycarbonate (PC), polystyrene (PS) or the like as the test piece TP.

In a state in which the upper gripper 21 and the lower gripper 22 being jigs for tensile impact testing are attached to the tester body 10, and it is confirmed that the lower gripper 22 is fixed to the load cell 27 without looseness, first of all, test conditions are set (step S11).

A user sets the test conditions such as test speed and so on using the input device 59 of the personal computer 42. Then, both ends of the test piece TP are gripped by the upper gripper 21 and the lower gripper 22 (step S12).

Next, data acquisition conditions are set (step S13). The user sets data collection conditions, such as data collection start time and data collection end time, sampling frequency, number of acquired data points (number of sampling points) and so on, using the input device 59 of the personal computer 42. The natural vibration that occurs in the tester body 10 during testing can be acquired by observing vibrations that become noticeable when a load applied to the load cell 27 via the test piece TP is removed due to breakage. In addition, in a state in which no test load is applied, the force in a state of receiving weight of a test jig (in this embodiment, the lower gripper 22) also needs to be known. Accordingly, in setting of the data collection start time and the data collection end time, it is preferable to set so that the data can be acquired before a tensile load is applied to the test piece TP and that a sufficient number of data points (e.g., a number of data points in which the number of data points after breakage of the test piece TP becomes 1000 points or more) for the later-described spectrum analysis can be obtained. In setting of the sampling frequency and the number of sampling points, it is preferable to use the following expression (1) to set values at which frequency resolution becomes 500 Hz or less.

$$\Delta f = 1/T = Fs/N ....(1)$$

Moreover, in expression (1), $\Delta f$ represents the frequency resolution, T represents a time window length, Fs represents the sampling frequency and N represents the number of sampling points.

When the setting of the data acquisition conditions is ended, a test is carried out (step S14). The force detected by the load cell 27 during a period from the data collection start time to the data collection end time set in the data acquisition conditions is sent to the personal computer 42 via the body control device 41 and saved in the memory device 57, and the measurement is ended (step S15).

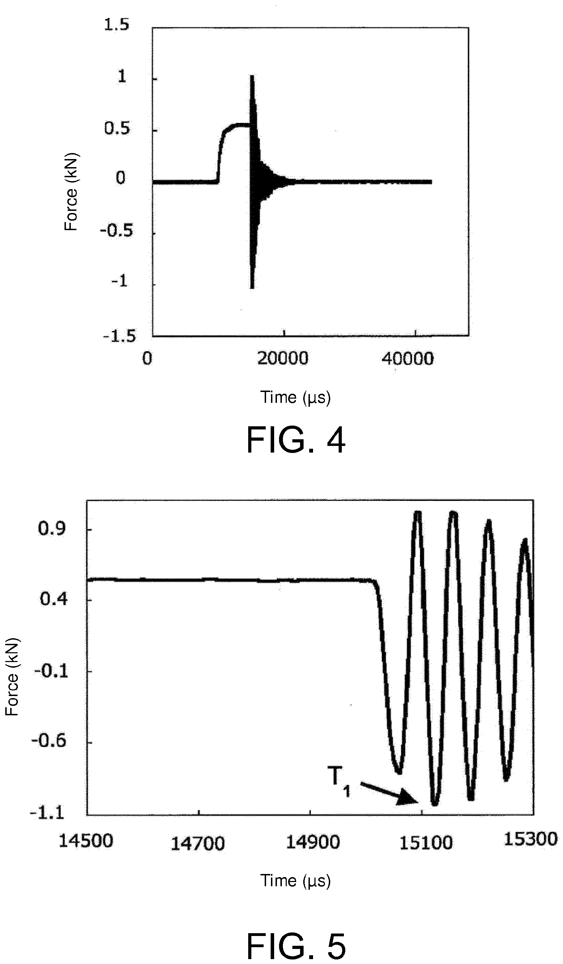

FIG. 4 is a graph showing an example of time-series data of force. FIG. 5 is a graph showing by enlarging a waveform before and after breakage of the test piece TP in the graph of FIG. 4. In these graphs, the vertical axis represents force (kN: kilonewton); the horizontal axis represents time ($\mu$s: microsecond).

With respect to the time-series data of the force obtained by carrying out the test, whether or not there is a sufficient number of data points for the later-described spectrum analysis can be confirmed using expression (1). In the time-series data of the force as shown in the graph of FIG. 4, as shown by enlargement in FIG. 5, an amplitude of a force waveform at around 15000 $\mu$s in-

creases due to the breakage. A starting point of the data after breakage can be set to, for example, time $T_1$ at which one and half periods of the vibration waveform have elapsed, as shown in FIG. 5. Moreover, when a sufficient number of data points for the later-described spectrum analysis cannot be acquired, the test piece TP is replaced (step S12), the settings of the data acquisition conditions are changed (step S13) and the test is carried out again (step S14).

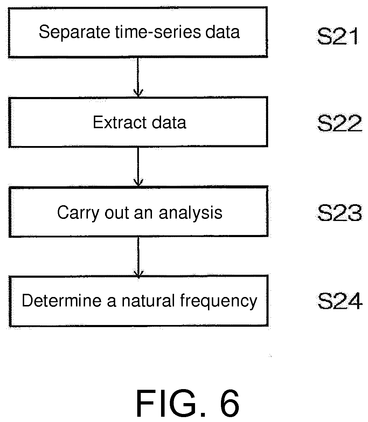

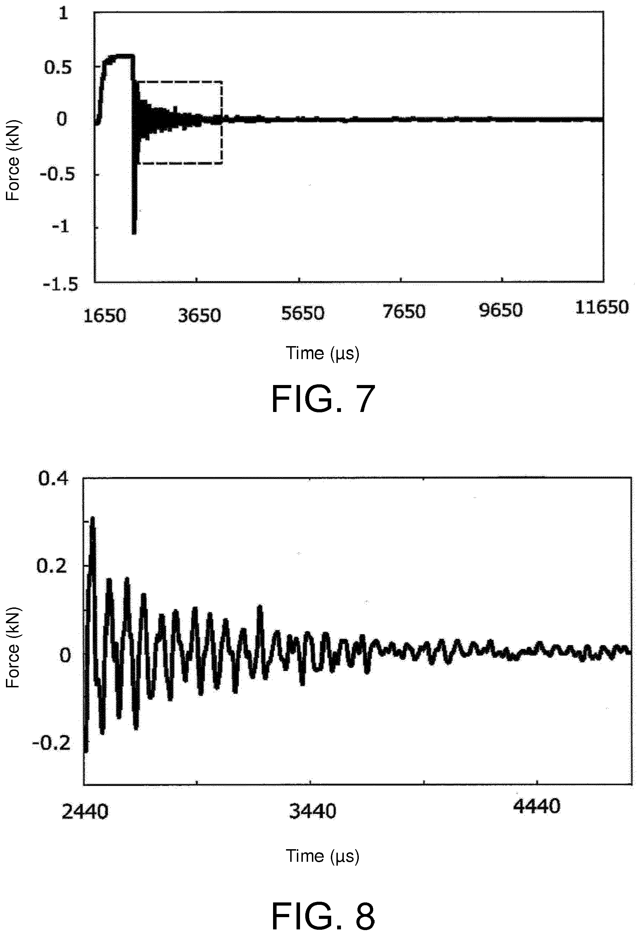

FIG. 6 is a flowchart showing a natural frequency analysis procedure. FIG. 7 is a graph showing an example of time-series data of force. FIG. 8 is a graph showing time-series data after breakage of the test piece TP. In the graphs of FIG. 7 and FIG. 8, the vertical axis represents force (kN: kilonewton); the horizontal axis represents time ($\mu$s: microsecond).

In the natural vibration analysis, first of all, the time-series data of the force acquired in accordance with the measurement procedure shown in FIG. 3 is read from the memory device 57, and the time-series data is separated before and after the force is removed from the test piece TP (step S21). The graph shown in FIG. 7 is the force data acquired by carrying out the tensile impact test under the condition of a test speed of 5 m/s at a sampling frequency of 1000 kHz. In the tensile impact test, the time-series data is separated into before breakage of the test piece TP and after breakage of the test piece TP. In separation of the time-series data of the force, time $T_1$ is determined as explained with reference to FIG. 5, and the data is separated before and after time $T_1$. Then, as shown in broken lines in FIG. 7, the data at and after time $T_1$ (2440 $\mu$s) is extracted as the data section for obtaining the natural frequency of the impact tester (step S22: data extraction step). Thereafter, a frequency spectrum analysis by fast Fourier transform (FFT) is carried out on the time-series data after breakage of the test piece TP that is extracted in step S22 and is shown in FIG. 8 (step S23: analysis step).

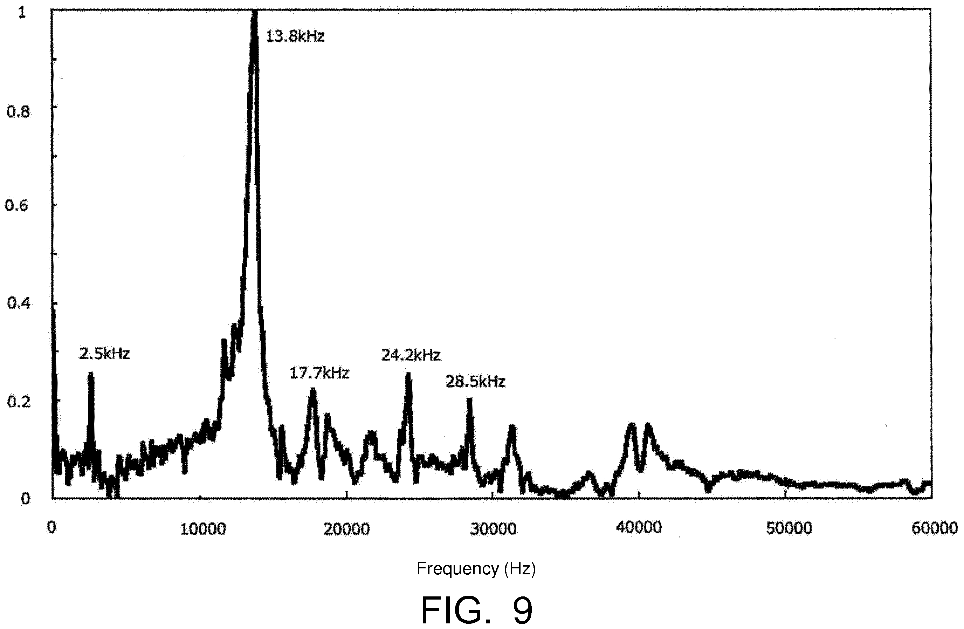

FIG. 9 is a graph showing a frequency spectrum analysis result of the time-series data shown in FIG. 8. In this graph, the horizontal axis represents frequency (Hz: hertz); the vertical axis represents power per frequency resolution $\Delta f$.

The frequency spectrum analysis result is displayed on the display device 58 and stored in the memory device 57. In the power spectrum shown in FIG. 9, the frequency 13.8 kHz having the largest peak is set as the natural frequency (step S24).

In this way, in the disclosure, since a natural frequency can be obtained by using force data at the time when a test is carried out, the natural frequency of the impact tester can be obtained simply and accurately without adding a special machine for measuring the natural frequency of the impact tester. In addition, in the disclosure, the user can confirm the effect of natural vibration of the impact tester on the force data during a test execution time slot in each individual impact test.

Moreover, although the explanation is made with respect to the tensile impact test in the above-mentioned embodiments, the disclosure is also applicable to a punching test in which a punch is caused to collide with a test piece or an impact test such as a three-point bending test in which a punch is struck on a test piece supported by a fulcrum.

[Description of Reference Numerals]

    10: tester body;
    11: table;
    12: support post;
    13: cross yoke;
    21: upper gripper;
    22: lower gripper;
    25: approach jig;
    26: joint;
    27: load cell;
    31: hydraulic cylinder;
    32: piston rod;
    33: stroke sensor;
    34: servo valve;
    40: control device;
    41: body control device;
    42: personal computer;
    43: memory;
    44: test control section;
    45: arithmetic device;
    46: communication section;
    51: memory;
    52: data extraction section;
    53: analysis section;
    55: arithmetic device;
    56: communication section;
    57: memory device;
    58: display device;
    59: input device;
    TP: test piece.

**Claims**

1. An evaluation method of an impact test in which an impact is rapidly applied to a test piece (TP), **characterized by** comprising:

    a data extraction step (S22) in which a data section for obtaining a natural frequency of an impact tester is extracted from time-series data detected by a force detector by carrying out the impact test, wherein in the data extraction step (S22), the time-series data is separated before and after force is removed from the test piece (TP), and data after the force is removed from the test piece (TP) is used as the data section for obtaining the natural frequency of the impact tester; and
    an analysis step (S23) in which a frequency spectrum analysis is carried out on the data section extracted in the data extraction step (S22).

2. An impact tester rapidly applying an impact to a test piece (TP), **characterized by** comprising:

    a load structure, applying force to the test piece (TP);
    a force detector, detecting the force applied to the test piece (TP); and
    a control device (40), comprising a memory section storing time-series data detected by the force detector,
    wherein the control device (40) comprises:

        a data extraction section (52), extracting from the time-series data stored in the memory section a data section for obtaining a natural frequency of the impact tester; and
        an analysis section (53), carrying out a frequency spectrum analysis on the data section extracted in the data extraction section (52)

FIG. 1

40

Load cell

42

PC

41

Body control device

43

Memory

Test control section

44

61

Arithmetic device

45

Communication section

46

Servo amplifier

51

Memory

52

Data extraction section

53

Analysis section

71

Arithmetic device

55

Communication section

56

Memory device

57

58

Display device

59

Input device

FIG. 2

| | |
|---|---|
| Set test conditions | S11 |
| Set a test piece TP | S12 |
| Set data collection conditions | S13 |
| Carry out a test | S14 |
| End the measurement | S15 |

# FIG. 3

FIG. 4

FIG. 5

| Separate time-series data | S21 |

| Extract data | S22 |

| Carry out an analysis | S23 |

| Determine a natural frequency | S24 |

# FIG. 6

FIG. 7

FIG. 8

FIG. 9

Europäisches
Patentamt

European
Patent Office

Office européen
des brevets

# EUROPEAN SEARCH REPORT

Application Number

EP 18 17 7789

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/084802 A1 (YUSUF ADESINA AKEEM [SA] ET AL) 24 March 2016 (2016-03-24) * paragraphs [0228] - [0246]; figures 10-27 * | 1,2 | INV. G01N3/30 G01N29/44 G01N29/46 G01N29/04 G01N29/42 |
| X | EP 2 120 034 A1 (UNIV BRUXELLES [BE]) 18 November 2009 (2009-11-18) * paragraph [0041] * | 1,2 | |
| X | EP 1 070 961 A1 (BRITISH TELECOMM [GB]) 24 January 2001 (2001-01-24) * paragraph [0015] * | 1,2 | |
| X | JP H08 105868 A (IWATSU ELECTRIC CO LTD) 23 April 1996 (1996-04-23) * figures 1-5 * | 1,2 | |
| A | WO 2012/153956 A2 (UNIV SEJONG IND ACAD COOP GR [KR]; KIM DONG JOO [KR]; EL-TAIL SHERIF [ ]) 15 November 2012 (2012-11-15) * the whole document * | 1,2 | |
| A | GB 118 175 A (AVERY LTD W & T; EDGAR ALFRED ALLCUT) 22 August 1918 (1918-08-22) * the whole document * | 1,2 | TECHNICAL FIELDS SEARCHED (IPC) G01N |
| A | WO 2012/004969 A1 (SHINETSU CHEMICAL CO [JP]; KUME FUMITAKA [JP]; NETSU SHIGEYOSHI [JP];) 12 January 2012 (2012-01-12) * abstract * | 1,2 | |

The present search report has been drawn up for all claims

| Place of search | Date of completion of the search | Examiner |
|---|---|---|
| The Hague | 27 September 2018 | Cantalapiedra, Igor |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 17 7789

This annex lists the patent family members relating to the patent documents cited in the above-mentioned European search report.
The members are as contained in the European Patent Office EDP file on
The European Patent Office is in no way liable for these particulars which are merely given for the purpose of information.

27-09-2018

| Patent document cited in search report | | Publication date | Patent family member(s) | | Publication date |
|---|---|---|---|---|---|
| US 2016084802 | A1 | 24-03-2016 | NONE | | |
| EP 2120034 | A1 | 18-11-2009 | NONE | | |
| EP 1070961 | A1 | 24-01-2001 | NONE | | |
| JP H08105868 | A | 23-04-1996 | NONE | | |
| WO 2012153956 | A2 | 15-11-2012 | KR 20120125792 A<br>WO 2012153956 A2 | | 19-11-2012<br>15-11-2012 |
| GB 118175 | A | 22-08-1918 | NONE | | |
| WO 2012004969 | A1 | 12-01-2012 | JP 2012017998 A<br>WO 2012004969 A1 | | 26-01-2012<br>12-01-2012 |

For more details about this annex : see Official Journal of the European Patent Office, No. 12/82

**REFERENCES CITED IN THE DESCRIPTION**

**Patent documents cited in the description**

- JP 2004333221 A

- JP 2004333143 A